# EUROPÄISCHE PATENTSCHRIFT

(11) **EP 3 194 900 B1**
(45) Veröffentlichungstag und Bekanntmachung des Hinweises auf die Patenterteilung: **31.10.2018**
(21) Anmeldenummer: 15751020.7
(22) Anmeldetag: 19.08.2015
(51) Int. Cl.: G01F 1/58, G01F 15/14

(54) **VERFAHREN ZUR HERSTELLUNG EINES MAGNETISCH-INDUKTIVEN DURCHFLUSSMESSGERÄTS MIT ZUM TEIL REDUZIERTEM QUERSCHNITT**
METHOD FOR PRODUCING A MAGNETO-INDUCTIVE FLOWMETER WITH A PARTLY REDUCED CROSS-SECTION
PROCÉDÉ DE FABRICATION D'UN DÉBITMÈTRE À INDUCTION MAGNÉTIQUE DE SECTION TRANSVERSALE RÉDUITE

(30) Priorität: 17.09.2014 DE 102014113408
(43) Veröffentlichungstag der Anmeldung: 26.07.2017
(73) Patentinhaber: Endress+Hauser Flowtec AG, 4153 Reinach (CH)
(72) Erfinder: TSCHAMBSER, Florent, F-68250 Grundolsheim (FR); DREHER, Lars, 79282 Ballrechten Dottingen (DE); SULZER, Thomas, CH-4058 Basel (CH)
(74) Vertreter: Andres, Angelika Maria
(86) Internationale Anmeldenummer: PCT/EP2015/069053
(87) Internationale Veröffentlichungsnummer: WO 2016/041724

(56) Entgegenhaltungen:
- EP-A1- 2 600 119
- DE-A1-102008 057 755
- US-A- 2 733 604
- US-A- 3 406 569

## Beschreibung

Die Erfindung betrifft ein Verfahren zur Herstellung einer Vorrichtung zur Messung des Durchflusses eines strömenden Fluides durch ein Messrohr nach dem magnetisch-induktiven Messprinzip.

Magnetisch-induktive Durchflussmessgeräte finden vielfach Anwendung in der Prozess- und Automatisierungstechnik für Fluide ab einer elektrischen Leitfähigkeit von etwa 5µS/cm. Entsprechende Durchflussmessgeräte werden von der Anmelderin in unterschiedlichsten Ausführungsformen für verschiedene Anwendungsbereiche beispielsweise unter der Bezeichnung PROMAG vertrieben.

Das Messprinzip beruht auf dem Faraday'schen Gesetz der magnetischen Induktion und ist aus diversen Veröffentlichungen bekannt. Mittels eines an einem Messabschnitt befestigten Magnetsystems wird im Wesentlichen senkrecht zur Strömungsrichtung des leitfähigen Fluides ein Magnetfeld zeitlich konstanter Stärke erzeugt. Dadurch werden die im strömenden Fluid vorhandenen Ionen in entgegengesetzte Richtungen abgelenkt. Die durch diese Ladungstrennung entstehende elektrische Spannung wird mittels mindestens eines ebenfalls im Messrohrteilabschnitt befestigten Messelektrodenpaares abgegriffen. Die abgegriffene Spannung ist proportional zur Strömungsgeschwindigkeit des Fluides und damit proportional zum Volumendurchfluss.

Die Messgenauigkeit eines magnetisch-induktiven Durchflussmessgeräts hängt dabei von vielen verschiedenen Faktoren ab. Manche davon betreffen die Konstruktion an sich, wie beispielsweise die Positioniergenauigkeit des Magnetsystems, oder die Auslesung des Messsignals über das mindestens eine Messelektrodenpaar sowie dessen Geometrie. Weiterhin weisen die Messperformance und Messgenauigkeit eine empfindliche Abhängigkeit vom vorherrschenden Strömungsprofil des Fluides auf.

Das vorherrschende Strömungsprofil wiederum ist abhängig von der Reynoldszahl, welche von der Fließgeschwindigkeit, der Geometrie des Messrohres und dessen Oberflächenrauhigkeit im Inneren Bereich, von physikalischen und/oder chemischen Materialparametern des Fluides, wie beispielsweise der Viskosität, und von den Einlaufbedingungen des strömenden Fluides im Messrohr vor dem Messabschnitt, dem sogenannten Einlaufabschnitt, in welchem das Messgerät befestigt ist.

Bei gegebener Durchflussmenge bzw. bei gegebenem Volumendurchfluss bestimmt sich die Fließgeschwindigkeit des Fluides aus der Querschnittsfläche des Messrohres. Für sehr geringe Fließgeschwindigkeiten liegt bei einem ausreichend langen geraden Einlaufabschnitt des Messrohres, an welchen sich der Messabschnitt anschließt, typischerweise ein laminares Strömungsprofil vor. Erhöht sich die Fließgeschwindigkeit bzw. die Reynoldszahl, gelangt man in einen Übergangsbereich, in welchem die Strömung anfällig wird für kleinste Störungen. In diesem Bereich ist eine vergleichsweise hohe Messwertabweichung zu beobachten. Erhöht man die Fließgeschwindigkeit weiter, so liegt ein zunehmend turbulentes Strömungsprofil vor, für welches die Messwertabweichung wieder vergleichbar ist mit derjenigen, welche für ein laminares Strömungsprofil vorherrscht. Sehr hohe Fließgeschwindigkeiten können allerdings nachteilig zum Auftreten von Kavitation führen.

Eine Bestrebung, die Messgenauigkeit in Bezug auf die Abhängigkeit vom vorherrschenden Strömungsprofil zu verbessern, besteht in einer teilweisen Reduzierung der Querschnittsfläche des Messrohres im Bereich des Messabschnitts. Eine Reduzierung der Querschnittsfläche bietet den Vorteil, dass die Fließgeschwindigkeit des Fluides in diesem Bereich höher ist. Dadurch wird das vorherrschende Strömungsprofil konditioniert, was in einem großen Bereich für die Fließgeschwindigkeit zu einer Verbesserung der Messperformance bzw. Messempfindlichkeit führt. Dadurch können dann wiederum der Einlaufabschnitt und Ausströmabschnitt des Messrohres kürzer gewählt werden, was insbesondere in Bezug auf den Materialaufwand von Vorteil sein kann.

Eine Konstruktion eines Messrohres mit teilweise reduzierter Querschnittsfläche ist beispielsweise in der EP2600119A1 bekannt geworden. Dort ist ein magnetisch-induktives Durchflussmessgerät beschrieben, wobei die Querschnittsfläche des Messabschnitts sowohl kleiner ist als die Querschnittsfläche des Einströmabschnitts, als auch kleiner als die Querschnittsfläche des sich an den Messabschnitt anschließenden Ausströmabschnitts. Darüber hinaus wird für den Messabschnitt insbesondere ein rechteckiges Messrohrprofil gewählt. In Bezug auf die Herstellung eines solchen Messrohres ist beschrieben, dass die Querschnittsreduktion durch von außen auf das Messrohr einwirkende Kräfte erreicht wird. Wie die Querschnittsreduzierung jedoch im Detail umgesetzt wird und wie die Krafteinwirkung kontrolliert werden kann, derart dass durch die Krafteinwirkung eine bestimmte Form des Messrohres erreicht werden kann, ist nicht offenbart. Ferner ist nicht beschrieben, wie gewährleistet werden kann, dass ein im Inneren des Messrohres angeordneter Liner durch die Querschnittsreduzierung nicht beschädigt wird.

Eine weitere Methode zur Reduzierung der Querschnittsfläche des Messabschnitts besteht in der Anwendung einer Innenhochdruckumformung, dem sogenannten Hydroforming Verfahren und ist in der DE102008057755A1 bekannt geworden. Jedoch besteht auch bei diesem Verfahren die Problematik in Bezug auf den Liner, der erst im Anschluss an die Umformung des Messrohres integriert werden kann. Dies ist aber wesentlich komplizierter, als die Integration eines Liners in ein Messrohr mit gleichbleibender Querschnittsfläche.

Der vorliegenden Erfindung liegt die Aufgabe zugrunde, ein Verfahren zur Herstellung einer Vorrichtung zur Messung des Durchflusses nach dem magnetisch-induktiven Messprinzip bereitzustellen, mit welchem die Querschnittsfläche im Messabschnitt einfach und zuverlässig reduziert werden kann.

Diese Aufgabe wird erfindungsgemäß gelöst durch ein Verfahren zur Herstellung einer Vorrichtung zur Messung des Durchflusses eines strömenden Fluides durch ein Messrohr aus Metall nach dem magnetisch-induktiven Prinzip mit folgenden Verfahrensschritten
- ein erster und ein zweiter Kragen aus Metall werden vom äußeren Bereich am Messrohr mit einer Ausrichtung senkrecht zur Rohrachse des Messrohres befestigt,
- das Messrohr wird im inneren Bereich mit einem elektrisch nicht leitfähigen, elastischen Liner ausgekleidet,
- ein Messabschnitt des Messrohres, welcher sich zumindest teilweise zwischen dem ersten und dem zweiten Kragen befindet, wird mittels einer Kaltumformung derart verändert, dass die Querschnittsfläche des Messabschnittes gegenüber den Querschnittsflächen eines sich vor dem Messabschnitt befindenden Einströmabschnitts des Messrohres und eines sich an den Messabschnitt anschließenden Ausströmabschnitts des Messrohres reduziert wird.

Durch die Kaltumformung kann die Querschnittsfläche des Messrohres im Bereich des Messabschnitts gezielt reduziert werden. Da die Temperaturen während einer Kaltumformung unterhalb der Rekristallisationstemperatur des jeweiligen Materials bleibt, ist dieses Verfahren im Vergleich zu den in der Beschreibungseinleitung genannten schonender. Es kommt beispielsweise typischerweise nicht zum Verzundern einzelner Bereiche. Weiterhin erlaubt die Methode enge Maßtoleranzen für die Umformung, bei welcher sich außerdem die Festigkeit bzw. Duktilität des Werkstoffes erhöht.

Vorteilhaft lässt sich das Verfahren mit geringen Investitionskosten und auf einfache Weise realisieren. Das Anbringen des ersten und zweiten Kragens hat eine zusätzliche stabilisierende Wirkung für den Umformprozess. Ein weiterer Vorteil des erfindungsgemäßen Verfahrens betrifft den Liner. Dieser kann bereits vor der Umformung in das Messrohr eingebracht werden. Dies erleichtert den Herstellungsprozess ungemein, denn eine passgenaue Integrierung eines Liners in ein Messrohr mit variabler Querschnittsfläche ist deutlich aufwendiger.

In einer vorteilhaften Ausgestaltung befindet sich sich der erste Kragen im Bereich des Übergangs zwischen dem Einströmabschnitt und Messabschnitt t und der zweite Kragen im Bereich des Übergangs zwischen dem Messabschnitt und dem Ausströmabschnitt.

Alternativ befindet sich der erste Kragen im Bereich des Einströmabschnittes und der zweite Kragen im Bereich des Ausströmabschnitts. Außerdem sieht eine Ausgestaltung vor, dass sich der erste und der zweite Kragen im Bereich des Messabschnitts befinden.

Die genaue Ausgestaltung und Anordnung des ersten und zweiten Kragens am Messrohr kann dabei auf die jeweilige Anwendung angepasst werden. Ist aus Platzgründen eine besonders kompakte Konstruktion erwünscht, empfiehlt sich eine Anbringung des ersten und zweiten Kragens im Bereich des Messabschnitts. Ansonsten ist in der Regel die Nennweite des Messrohres entscheidend für die Positionierung des ersten und zweiten Kragens. Es versteht sich ferner von selbst, dass neben den hier genannten Anordnungen noch weitere Möglichkeiten für die genaue Positionierung vorhanden sind, welche ebenfalls unter die Erfindung fallen.

Es ist von Vorteil, wenn am ersten und am zweiten Kragen ein Gehäuse für das Durchflussmessgerät befestigt wird. Durch diese Maßnahme werden keinerlei weitere Konstruktionen am Messrohr oder Bauteil benötigt, um das Gehäuse des Durchflussmessgeräts zu befestigen. Dem ersten und zweiten Kragen kommt somit zudem eine Doppelfunktionalität zu - die stabilisierende Wirkung während der Umformung sowie die einer Befestigungskomponente für das Gehäuse.

Es ist außerdem von Vorteil, wenn ein Messrohr mit kreisrundem oder rechteckigem Querschnitt verwendet wird.

In einer bevorzugten Ausgestaltung weist der Messabschnitt nach der Kaltumformung eine veränderte Querschnittsflächengeometrie, insbesondere ein Rechteckprofil, auf. Es wird also nicht nur die Querschnittsfläche reduziert, sondern auch eine Änderung ihrer Geometrie vorgenommen.

In einer besonders bevorzugten Ausgestaltung wird die Kaltumformung mittels zumindest zwei Druckstempeln vermittelt, welche vom äußeren Bereich des Messrohres zwischen dem ersten und dem zweiten Kragen von zwei sich gegenüberliegenden Seiten an das Messrohr gepresst werden. Die Krägen stützen sich dann während der Umformung auf die Druckstempel und bewirken entsprechend eine Stabilisierung.

Es ist weiterhin von Vorteil, wenn auf zumindest zwei gegenüberliegenden Seiten des Messrohres vom äußeren Bereich jeweils zumindest ein Schweißbolzen befestigt wird, welcher mittig entlang einer zur Rohrachse parallelen Verbindunglinie durch den ersten und zweiten Kragen positioniert wird. Dabei ist es insbesondere von Vorteil, wenn das Magnetsystem an den zumindest zwei Schweißbolzen befestigt wird. Ebenfalls ist es von Vorteil, wenn die Schweißbolzen vor der Kaltumformung am Messrohr befestigt werden, und wenn für die Kaltumformung zumindest zwei Druckstempel verwendet werden, welche Druckstempel Aussparungen für die Schweißbolzen aufweisen.

In einer weiteren Ausgestaltung werden nach der Kaltumformung zumindest zwei Messelektroden im oder am Messrohr befestigt.

In einer besonders bevorzugten Ausgestaltung wird ein Liner mit einer Härte weniger als Shore 90A verwendet. Durch die Verwendung eines solchen Liners kann gewährleistet werden, dass der Liner während der Kaltumformung nicht beschädigt wird, da er eine ausreichende Elastizität aufweist.

Es ist dabei von Vorteil, wenn ein Liner aus Polyurethan, Weichgummi, Hartgummi oder PTFE verwendet wird.

In einer bevorzugten Ausgestaltung werden der erste und zweite Kragen geschweißt und die Schweißbolzen durch Punktschweißen am Messrohr befestigt.

In einer weiteren bevorzugten Ausgestaltung wird die Querschnittsfläche des Messabschnittes gegenüber der Querschnittsflächen des Einströmabschnitts und Ausströmabschnitts um den Faktor 1,1 bis 1,5 reduziert.

Die Erfindung sowie ihre vorteilhaften Ausgestaltungen werden im Folgenden anhand der Figuren Fig. 1 bis Fig.3 beschrieben. Es zeigt:
Fig. 1: ein magnetisch-induktives Durchflussmessgerät gemäß dem Stand der Technik,
Fig. 2: ein mit einem Liner ausgekleidetes Messrohr, an welchem ein erster und ein zweiter Kragen befestigt sind,
Fig. 3: eine Illustrierung einer Kaltumformung mittels zweier Druckstempel an einem Messrohr wie in Fig. 2 dargestellt.
Fig. 4: ein kaltumformtes Messrohr mit montiertem Magnetsystem.

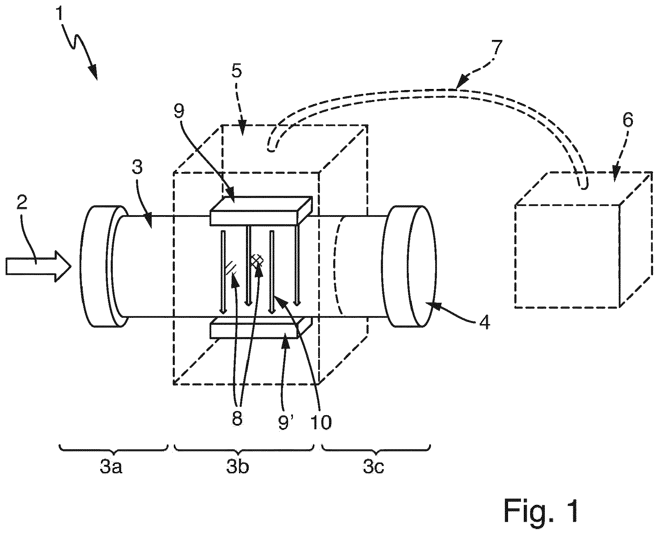

In Fig. 1 ist ein magnetisch-induktives Durchflussmessgerät 1 zur Messung des Durchflusses eines strömenden Fluides 2 durch ein Messrohr 3 gezeigt. Das Messrohr 3 ist im dem Fluid zugewandten Bereich, d. h. an der Innenseite über die ganze Länge, mit einem elektrisch isolierenden Liner 4 versehen. Es ist zweckdienlich, das Messrohr 3 virtuell in einen Einlaufabschnitt 3a, einen Messabschnitt 3b, an welchem die Sensoreinheit angebracht ist, und einen Ausströmabschnitt 3c zu unterteilen. Für die Sensoreinheit sind ein Messelektrodenpaar 8 zum Abgreifen der induzierten Spannung sowie das Magnetsystem 9,9', welches der Einfachheit halber durch zwei Quader dargestellt ist, gezeigt. Das Magnetsystem 9,9' umfasst zumindest zwei Spulen 9,9' zur Erzeugung des Magnetfeldes 10 und gegebenenfalls auch Polschuhe zur Realisierung einer vorteilhaften räumlichen Verteilung und/oder Feldbleche. Die Verbindungsachsen des Messelektrodenpaares 8 und der Feldspulen 9 verlaufen jeweils senkrecht zueinander, wobei die beiden Feldspulen und die beiden Messelektroden 8 jeweils auf gegenüberliegenden Seiten des Messrohres 3 positioniert sind.

Die Sensoreinheit mit ihren jeweiligen Komponenten wie z. B, dem Messelektrodenpaar 8 und dem Magnetsystem 9,9' ist üblicherweise zumindest teilweise von einem Gehäuse 5 umgeben. Im Gehäuse 5 oder im vorliegenden Falle außerhalb des Gehäuses 5 ist weiterhin eine Elektronikeinheit 6 vorgesehen welche über ein Verbindungskabel 7 mit dem Feldgerät 1 elektrisch verbunden ist. Die Elektronikeinheit dient der Signalerfassung und/oder -auswertung und der Speisung der Spulen, sowie als Schnittstelle zur Umgebung, z. B. der Messwertausgabe oder Einstellung des Geräts.

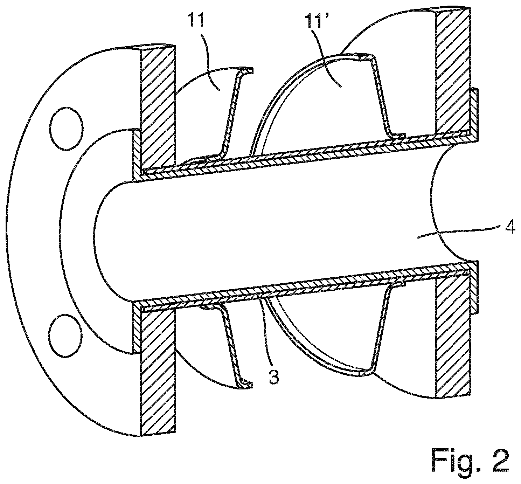

Die ersten Schritte des erfindungsgemäßen Verfahrens zur Reduzierung des Querschnitts des Messrohres im Messabschnitt sind in Fig. 2 gezeigt. Zuerst werden ein erster Kragen 11 und ein zweiter Kragen 11' vom äußeren Bereich am Messrohr 3 befestigt. Anschließend wird das Messrohr 3 im inneren Bereich mit einem elektrisch nicht leitfähigen Liner 4 ausgekleidet. In diesem Beispiel weist das Messrohr 3 eine kreisrunde Querschnittsfläche auf.

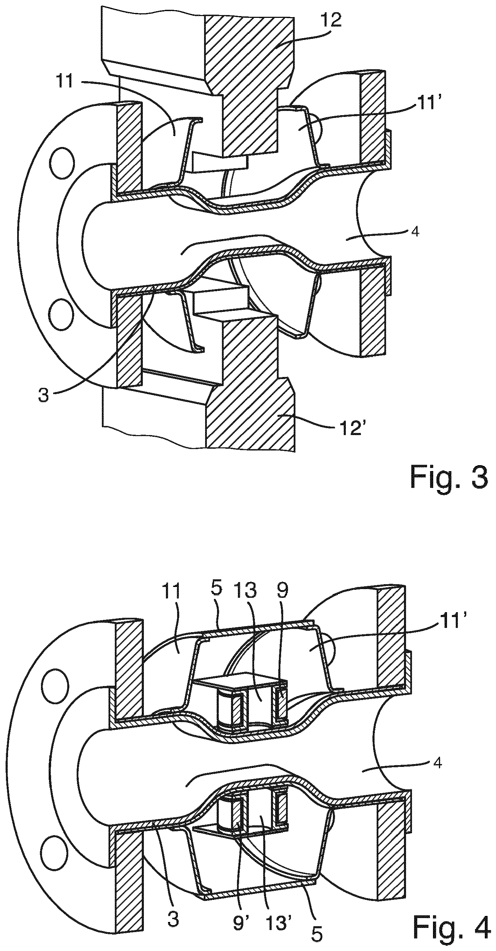

Die Durchführung einer erfindungsgemäßen Kaltumformung ist in Fig. 3 illustriert. Die Kaltumformung wird mittels zweier Druckstempel 12, 12' vorgenommen, welche im Bereich zwischen dem ersten 11 und zweiten Kragen 11' von zwei gegenüberliegenden Seiten des Messrohres 3 an das Messrohr gepresst werden. Der erste und zweite Kragen 11,11' bewirken während dieses Vorgangs eine stabilisierende Wirkung für das Messrohr 3. In diesem Beispiel sind keine Schweißbolzen vorgesehen. Es versteht sich jedoch von selbst, dass die Druckstempel 12,12' in einem anderen Ausführungsbeispiel auch Aussparungen für zuvor angebrachte Schweißbolzen aufweisen können.

Nach der Umformung können die jeweils benötigten Komponenten der Sensoreinheit des Durchflussmessgeräts angebracht werden. Zuerst können beispielsweise die zumindest zwei Messelektroden 8,8' befestigt werden und anschließend das Magnetsystem 9,9'.

In Fig. 4 ist schließlich ein kaltumformtes Messrohr 3' mit montiertem Magnetsystem 9,9' gezeigt, welche an zwei Schweißbolzen 13,13' angebracht sind. Ferner ist ein an den ersten und zweiten Kragen 11,11' geschweißtes Gehäuse 5 zu sehen. Die Anordnung eines Gehäuses 5 direkt am ersten und zweiten Kragen 11,11' ist besonders einfach umzusetzen und bedarf keiner weiteren konstruktiven Mittel. Damit kommt dem ersten und zweiten Kragen im Prinzip eine Doppelfunktion zu: eine Stabilisierung des Messrohres 3 während der Kaltumformung und eine Aufnahmevorrichtung für das Gehäuse 5.

### Bezugszeichen

- 1: magnetisch induktives Durchflussmessgerät gemäß Stand der Technik
- 2: strömendes Fluid
- 3: Messrohr
- 4: elektrisch isolierende Auskleidung, Liner
- 5: Gehäuseeinheit oder Gehäuse
- 6: Elektronikeinheit
- 7: Verbindungskabel
- 8,8': Messelektroden
- 9,9': Magnetsystem mit zumindest zwei Spulen
- 10: Magnetfeld senkrecht zur Strömungsrichtung des Fluides und zur Verbindungsachse durch die Messelektroden
- 11,11': erster und zweiter Kragen
- 12,12': Druckstempel
- 13,13': Schweißbolzen

## Patentansprüche

1. Verfahren zur Herstellung einer Vorrichtung (1) zur Messung des Durchflusses eines strömenden Fluides durch ein Messrohr (3) aus Metall nach dem magnetisch-induktiven Prinzip mit folgenden Verfahrensschritten
- Ein erster und ein zweiter Kragen (11,11') aus Metall werden vom äußeren Bereich am Messrohr (3) mit einer Ausrichtung senkrecht zur Rohrachse des Messrohres (3) befestigt,
- das Messrohr (3) wird im inneren Bereich mit einem elektrisch nicht leitfähigen, elastischen Liner (4) ausgekleidet,
- ein Messabschnitt (3b) des Messrohres (3), welcher sich zumindest teilweise zwischen dem ersten (11) und dem zweiten Kragen (11') befindet, wird mittels einer Kaltumformung derart verändert, dass die Querschnittsfläche des Messabschnittes (3b) gegenüber den Querschnittsflächen eines sich vor dem Messabschnitt befindenden Einströmabschnitts (3a) des Messrohres (3) und eines sich an den Messabschnitt (3b) anschließenden Ausströmabschnitts (3c) des Messrohres (3) reduziert wird.

2. Verfahren nach Anspruch 1,
wobei sich der erste Kragen (11) im Bereich des Übergangs zwischen dem Einströmabschnitt (3a) und Messabschnitt (3b) befindet und der zweite Kragen (11') im Bereich des Übergangs zwischen dem Messabschnitt (3b) und dem Ausströmabschnitt (3c).

3. Verfahren nach Anspruch 1,
wobei sich der erste Kragen (11) im Bereich des Einströmabschnittes (3a) befindet und der zweite Kragen (11') im Bereich des Ausströmabschnitts (3c).

4. Verfahren nach Anspruch 1,
wobei sich der erste (11) und der zweite Kragen (11') im Bereich des Messabschnitts (3b) befinden.

5. Verfahren nach zumindest einem der vorhergehenden Ansprüche,
wobei am ersten (11) und am zweiten Kragen (11') ein Gehäuse (5) befestigt wird.

6. Verfahren nach einem der vorhergehenden Ansprüche,
wobei ein Messrohr (3) mit kreisrundem oder rechteckigem Querschnitt verwendet wird.

7. Verfahren nach zumindest einem der vorhergehenden Ansprüche, wobei der Messabschnitt (3b) nach der Kaltumformung eine veränderte Querschnittsflächengeometrie, insbesondere ein Rechteckprofil, aufweist.

8. Verfahren nach zumindest einem der vorhergehenden Ansprüche, wobei die Kaltumformung mittels zumindest zwei Druckstempeln (12,12') vermittelt wird, welche vom äußeren Bereich des Messrohres (3) zwischen dem ersten (11) und dem zweiten Kragen (11') von zwei sich gegenüberliegenden Seiten an das Messrohr gepresst werden.

9. Verfahren nach zumindest einem der vorhergehenden Ansprüche, wobei auf zumindest zwei gegenüberliegenden Seiten des Messrohres (3) vom äußeren Bereich jeweils zumindest ein Schweißbolzen (13,13') befestigt wird, welcher mittig entlang einer zur Rohrachse parallelen Verbindunglinie durch den ersten (11) und zweiten Kragen (11') positioniert wird.

10. Verfahren nach Anspruch 9,
wobei das Magnetsystem (9,9') an den Schweißbolzen (13,13') befestigt wird.

11. Verfahren nach zumindest einem der Ansprüche 9 oder 10,
wobei die Schweißbolzen (13,13') vor der Kaltumformung am Messrohr (3) befestigt werden, und wobei für die Kaltumformung zumindest zwei Drucktempel (12,12') verwendet werden, welche Druckstempel (12,12') Aussparungen für die Schweißbolzen (13,13') aufweisen.

12. Verfahren nach einem der vorhergehenden Ansprüche,
wobei nach der Kaltumformung zumindest zwei Messelektroden (8,8') im oder am Messrohr (3) befestigt werden.

13. Verfahren nach zumindest einem der vorhergehenden Ansprüche, wobei ein Liner (4) mit einer Härte weniger als Shore 90A verwendet wird.

14. Verfahren nach Anspruch 13,
wobei ein Liner (4) aus Polyurethan, Weichgummi, Hartgummi oder PTFE verwendet wird.

15. Verfahren nach zumindest einem der vorhergehenden Ansprüche, wobei der erste (11) und zweite Kragen (11') geschweißt werden und die Schweißbolzen (13,13') durch Punktschweißen am Messrohr (3) befestigt werden.

16. Verfahren nach zumindest einem der vorhergehenden Ansprüche, wobei die Querschnittsfläche des Messabschnittes (3b) gegenüber der Querschnittsflächen des Einströmabschnitts (3a) und Ausströmabschnitts (3c) um den Faktor 1,1 bis 1,5 reduziert wird.

## Claims

1. Procedure to produce an apparatus (1) to measure the flow of a flowing fluid through a metal measuring tube (3) according to the electromagnetic principle, said procedure involving the following steps:
- a first and a second metal collar (11, 11') are secured on the measuring tube (3) from the exterior with an alignment perpendicular to the tube axis of the measuring tube (3),
- the measuring tube (3) is lined in the interior with an electrically non-conductive, elastic liner,
- a measurement section (3b) of the measuring tube (3), which is at least partially located between the first (11) and the second collar (11'), is modified by cold working in such a way that the cross-section surface of the measurement section (3b) is reduced in relation to the cross-section surfaces of an inflow section (3a) of the measuring tube (3), which is situated upstream from the measurement section, and of an outflow section (3c) of the measuring tube (3), which follows on from the measurement section (3b).

2. Procedure as claimed in Claim 1,
wherein the first collar (11) is located in the area of the transition between the inflow section (3a) and the measurement section (3b), and the second collar (11') is located in the area of the transition between the measurement section (3b) and the outflow section (3c).

3. Procedure as claimed in Claim 1,
wherein the first collar (11) is located in the area of the inflow section (3a) and the second collar (11') is located in the area of the outflow section (3c).

4. Procedure as claimed in Claim 1,
wherein the first (11) and the second collar (11') are located in the area of the measurement section (3b).

5. Procedure as claimed in at least one of the previous claims,
wherein a housing (5) is secured to the first (11) and the second collar (11').

6. Procedure as claimed in one of the previous claims,
wherein a measuring tube (3) with a circular or rectangular cross-section is used.

7. Procedure as claimed in at least one of the previous claims,
wherein, following the cold forming, the measurement section (3b) has a modified cross-section geometry, particularly a rectangular profile.

8. Procedure as claimed in at least one of the previous claims,
wherein the cold forming is implemented using at least two compression dies (12, 12'), which are pressed onto the measuring tube from two opposite sides starting from the outer area of the measuring tube (3), between the first (11) and the second collar (11').

9. Procedure as claimed in at least one of the previous claims,
wherein at least one welding stud (13, 13') is secured from the outside in each case on at least two opposite sides of the measuring tube (3), said stud being positioned centrally along a connection line that runs through the first (11) and second (11') collar and is parallel to the tube axis.

10. Procedure as claimed in Claim 9,
wherein the magnetic system (9, 9') is fixed to the welding studs (13, 13').

11. Procedure as claimed in at least one of the Claims 9 or 10,
wherein the welding studs (13, 13') are fixed on the measuring tube (3) before cold forming and wherein at least two compression dies (12, 12') are used for cold forming, said compression dies (12, 12') having recesses for the welding studs (13, 13').

12. Procedure as claimed in one of the previous claims,
wherein at least two measuring electrodes (8, 8') are secured in or on the measuring tube (3) after the cold forming.

13. Procedure as claimed in at least one of the previous claims,
wherein a liner (4) is used with a hardness rating of less than Shore 90A.

14. Procedure as claimed in Claim 13,
wherein a liner (4) is used that is made of polyurethane, soft rubber, hard rubber or PTFE.

15. Procedure as claimed in one of the previous claims,
wherein the first (11) and the second collar (11') are welded and the welding studs (13, 13') are secured to the measuring tube (3) by spot welding.

16. Procedure as claimed in at least one of the previous claims,
wherein the cross-section surface of the measurement section (3b) in relation to the cross-section surfaces of the inflow section (3a) and the outflow section (3c) is reduced by a factor of 1.1 to 1.5.

## Revendications

1. Procédé destiné à la fabrication d'un dispositif (1) pour la mesure du débit d'un fluide s'écoulant à travers un tube de mesure (3) métallique d'après le principe magnéto-inductif, lequel procédé comprend les étapes suivantes :
- un premier et un deuxième collets (11, 11') métalliques sont fixés à partir de la zone extérieure sur le tube de mesure (3), avec un alignement perpendiculaire à l'axe du tube de mesure (3),
- le tube de mesure (3) est revêtu dans la zone intérieure d'un liner (4) élastique, non conducteur électriquement,
- un tronçon de mesure (3b) du tube de mesure (3), qui se trouve au moins partiellement entre le premier (11) et le deuxième collet (11'), est modifié au moyen d'un formage à froid de telle manière que la superficie de la section du tronçon de mesure (3b) est réduite par rapport à la superficie de la section d'un tronçon d'entrée d'écoulement (3a) du tube de mesure (3), situé en amont du tronçon de mesure, et une superficie de la section d'un tronçon de sortie d'écoulement (3c) du tube de mesure (3), situé en aval du tronçon de mesure.

2. Procédé selon la revendication 1,
pour lequel le premier collet (11) se trouve dans la zone de la transition entre le tronçon d'entrée d'écoulement (3a) et le tronçon de mesure (3b), et le deuxième collet (11') se trouve dans la zone de la transition entre le tronçon de mesure (3b) et le tronçon de sortie d'écoulement (3c).

3. Procédé selon la revendication 1,
pour lequel le premier collet (11) se trouve dans la zone du tronçon d'entrée d'écoulement (3a) et le deuxième collet (11') dans la zone du tronçon de sortie d'écoulement (3c.)

4. Procédé selon la revendication 1,
pour lequel le premier (11) et le deuxième collet (11') se trouvent dans la zone du tronçon de mesure (3b).

5. Procédé selon au moins l'une des revendications précédentes,
pour lequel un boîtier (5) est fixé sur le premier (11) et sur le deuxième collet (11').

6. Procédé selon l'une des revendications précédentes,
pour lequel est utilisé un tube de mesure (3) avec une section circulaire ou rectangulaire.

7. Procédé selon au moins l'une des revendications précédentes,
pour lequel le tronçon de mesure (3b) présente, après le formage à froid, une géométrie modifiée de la superficie de section, notamment un profil rectangulaire.

8. Procédé selon au moins l'une des revendications précédentes,
pour lequel le formage à froid est réalisé au moyen d'au moins deux matrices (12, 12'), lesquelles sont pressées sur le tube de mesure à partir de la zone extérieure du tube de mesure (3), entre le premier (11) et le deuxième collet (11') de deux côtés opposés.

9. Procédé selon au moins l'une des revendications précédentes,
pour lequel est fixé sur au moins deux côté opposés du tube de mesure (3), à partir de la zone extérieure, respectivement au moins un goujon à souder (13, 13'), lequel est positionné au centre, le long d'une ligne de liaison passant à travers le premier (11) et le deuxième collet (11') et parallèle à l'axe de tube.

10. Procédé selon la revendication 9,
pour lequel le système magnétique (9, 9') est fixé sur le goujon à souder (13, 13').

11. Procédé selon au moins l'une des revendications 9 ou 10,
pour lequel les goujons à souder (13, 13') sont fixés sur le tube de mesure (3) avant le formage à froid, et pour lequel au moins deux matrices (12, 12') sont utilisées pour le formage à froid, lesquelles matrices (12, 12') présentent des évidements pour les goujons à souder (13, 13').

12. Procédé selon l'une des revendications précédentes,
pour lequel sont fixées, après le formage à froid, au moins deux électrodes de mesure (8, 8') dans ou sur le tube de mesure (3).

13. Procédé selon au moins l'une des revendications précédentes,
pour lequel est utilisé un liner (4) avec une dureté inférieure à Shore 90A.

14. Procédé selon la revendication 13,
pour lequel est utilisé un liner (4) en polyuréthane, caoutchouc tendre, caoutchouc dur ou PTFE.

15. Procédé selon au moins l'une des revendications précédentes,
pour lequel le premier (11) et le deuxième collet (11') sont soudés et les goujons à souder (13, 13') sont fixés sur le tube de mesure (3) par un procédé de soudage par points.

16. Procédé selon au moins l'une des revendications précédentes,
pour lequel la superficie de la section du tronçon de mesure (3b) par rapport à la superficie de la section du tronçon d'entrée d'écoulement (3a) et du tronçon de sortie d'écoulement (3c) est réduite d'un facteur de 1,1 à 1,5.
